# EUROPEAN PATENT SPECIFICATION

(11) **EP 2 262 083 B1**
(45) Date of publication and mention of the grant of the patent: **15.07.2015**
(21) Application number: 09007760.3
(22) Date of filing: 12.06.2009
(51) Int. Cl.: H02K 33/14, B26B 19/28, A61C 17/34

(54) **Electric motor for a small electric appliance**
Elektromotor für ein kleines Elektrogerät
Moteur électrique pour un petit appareil électrique

(43) Date of publication of application: 15.12.2010
(73) Proprietor: Braun GmbH, 61476 Kronberg/Taunus (DE)
(72) Inventor: Kreßmann, Frank, 65760 Eschborn (DE); Schober, Uwe, 61479 Glashütten (DE); Doll, Alexander, 61476 Kronberg/Taunus (DE)

(56) References cited:
- WO-A-2005/062445
- DE-A1- 3 315 848
- US-A1- 2009 070 948
- US-B1- 6 429 611

## Description

The invention relates to an electric motor for a small electric appliance. The invention furthermore relates to a small electric appliance having such a motor.

Electric motors are known which can generate a rotary and a linear oscillatory movement and are used, for example, for electric toothbrushes.

Known motors provide for this purpose a DC motor and a subsequent translation of the rotary movement into an additional linear movement with the help of a transmission or the generation of the linear movement in a first drive unit and the generation of the rotary movement in a second drive unit.

An electric motor described in WO 2005/062445 has two oscillatory motor components and a magnet arrangement with a plurality of permanent magnets. A coil generates a magnetic field which is provided for the generation of a force for the excitation of a linear oscillatory movement of an oscillatory component by interaction with the magnet arrangement. The interaction of the magnetic field generated by the coil and the magnet arrangement additionally generates a torque for the generation of a rotary oscillatory movement of a second oscillatory motor component.

Document WO 2005/062445 A1 describes a motor in accordance with the preamble of claim 1. Document US 6 429 611 B1 describes a similar motor having a first magnet arrangement that is arranged to take the function of the second magnet arrangement of the electric motor in accordance with the preamble of claim 1.

It is the object of the present invention to provide a compact and cost-effective electric motor of simple construction for small appliances.

This object is satisfied by an electric motor having the features of claim 1. A small electric appliance having an electric motor in accordance with the invention is the subject of claim 10.

An electric motor in accordance with the invention for a small electric appliance has a rotor and a stator and a coil for the generation of a magnetic field. A first magnet arrangement has at least one permanent magnet which, by interaction with a magnetic field generated with the coil, generates a force for the excitation of a rotary movement of the rotor. An electric motor in accordance with the invention is in particular characterized in that a second magnet arrangement is provided which comprises at least one second permanent magnet which is arranged such that a translatory oscillatory movement of the rotor is effected by the Lorentz force acting in the field of the second permanent magnet on the conductors of the coil through which current flows.

Two different physical principles are combined with the help of the electric motor in accordance with the invention in order to generate the rotary movement, on the one hand, and the translatory movement, on the other hand. The rotary movement is generated using a first magnet arrangement and a coil in a manner known per se. An iron core with a coil in which a magnetic flux is generated with the help of the coil can, for example, be provided as a stator in the center of the drive. Permanent magnets arranged in a surrounding manner align in accordance with the flux direction so that a rotary movement of the surrounding rotor takes place.

In accordance with claim 1, a second magnet arrangement is provided in accordance with the invention which has at least one permanent magnet which generates a magnetic Lorentz force on the conductors of the coil through which current flows. With a fixed coil, this means a relative movement of the at least one second permanent magnet in the translatory direction. A compact, simple and cost-effective embodiment for an electric motor for a small appliance is possible by the utilization of the Lorentz force of a magnet arrangement on the conductors of the coil through which current flows. The individual parts for the construction of the drive are reduced.

It is generally possible to couple the relative translatory movement of the at least one second permanent magnet and the rotary movement of the rotor to obtain a coupled rotary and linear movement. It is, however, particularly simple if the second permanent magnet moves together with the rotor, in particular if it is connected to it. The rotary movement of the rotor and the linear movement of the at least second permanent magnet are then automatically combined to a coupled movement.

In accordance with a first alternative of the invention, at least one second permanent magnet is arranged such that it generates a field which is aligned substantially parallel to the axis of rotation of the rotor if no other magnetic field influencing fields are present. This can in particular be achieved in a simple manner if the at least one second permanent magnet is disposed above or beneath the coil in symmetrical alignment with the axis of rotation of the rotor. With such an arrangement, provision can, for example, be made that a second permanent magnet is provided both above and beneath the coil to double the desired effect. The magnetic flux which is generated by such an arrangement of the at least one second permanent magnet in particular acts on the conductor regions of the coil aligned perpendicular to the axis of rotation.

In accordance with a second alternative of the invention, the at least one second permanent magnet is arranged such that it generates a field substantially radially to the axis of rotation of the rotor if no other magnet field-influencing elements were present. The magnetic flux which is generated by this arrangement of the at least one second permanent magnet in particular acts on the conductor regions of the coil aligned parallel to the axis of rotation.

A particularly space-saving arrangement is that the at least one permanent magnet of the second magnet arrangement is arranged between the permanent magnets of the first magnet arrangement.

Both described embodiments can also be combined with one another, with in particular a second magnet arrangement therefore being provided which has at least one second permanent magnet which generates a field which is aligned substantially radially to the axis of rotation of the rotor and has at least one additional permanent magnet whose field is aligned substantially parallel to the axis of rotation of the rotor. In this manner, the strength of the Lorentz force, and thus, for example, the amplitude of the translatory oscillatory movement, can be set very flexibly.

With a suitable arrangement of the individual segments of the permanent magnets of the first and second magnet arrangements, it is also possible that at least a part of the second magnet arrangement is in one piece with a part of the first magnet arrangement.

Electric motors in accordance with the invention can be designed to carry out a translatory oscillatory movement and a continuous rotary movement. The invention is, however, particularly expedient when the rotary movement also is an oscillatory movement.

When the rotary oscillatory movement and the translatory oscillatory movement have different resonant frequencies, the individual oscillatory movements can also be controlled separately by feeding in current of correspondingly selected frequencies. Feeding in mixed frequencies effects a correspondingly distributed rotary or translatory oscillatory movement.

It is generally possible that an optionally present soft magnetic core (of iron, for example) of the coil is, for example, rotatably supported and the permanent magnets of the electric motor are still. The core then forms the rotor which also carries out the translatory oscillatory movement. It is, however, more expedient and simpler if the core of the coil is part of the stator of the electric motor and if the rotor includes the first magnet arrangement. In this respect, an arrangement is particularly compact in which the coil is arranged inside the first magnet arrangement.

With the electric motors in accordance with the invention, the arrangement is preferably selected such that the translatory movement is perpendicular to the axis of rotation.

The electric motor in accordance with the invention is particularly suitable for the drive of small electric appliances such as electric toothbrushes in which the brush head carries out a translatory oscillatory movement and a rotary oscillatory movement or for razors where the shaving head carries out a translatory and a rotary oscillatory movement.

The invention will be explained with reference to the enclosed schematic Figures in detail which show embodiments in accordance with the invention by way of example. There are shown:
- Fig. 1: a perspective schematic view of an electric motor in accordance with the invention in a partly transparent representation;
- Fig. 2: a sectional view in the Y-Z plane indicated in Fig. 1;
- Fig. 3: a perspective schematic view of another embodiment in accordance with the invention in a partly transparent representation;
- Fig. 4: a perspective schematic view of a further embodiment in accordance with the invention in a partly transparent representation;
- Fig. 5: a cross-sectional view in the X-Y plane indicated in Fig. 4 with indicated magnetic field lines; and
- Fig. 6: a perspective schematic view of yet a further embodiment in accordance with the invention in a partly transparent representation.

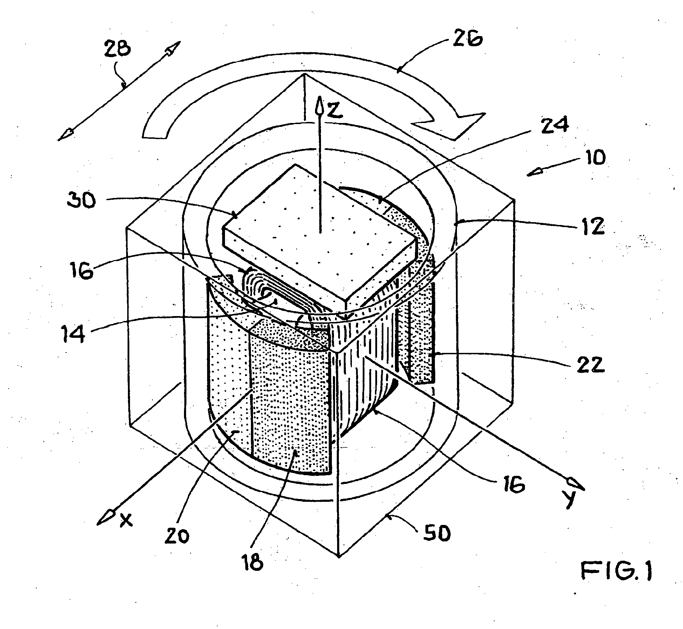

Fig. 1 shows an electric motor 10 for a small electric appliance having a rotor 12 which is shown transparent here for the better representability of the other components. A drawing border 50 is shown in Fig. 1 only to illustrate the perspective.

Permanent magnets 18, 20, 22, 24 are fastened inside the rotor and are moved with it, with magnets 18, 20 or 22, 24 disposed next to one another each being magnetized with opposite polarities. The rotor is rotatably supported about the z axis, which should be indicated by the arrow 26. A coil 16 is arranged within the rotor with an iron core 14 located therein as a stator. The coil windings are disposed in planes parallel to the Y-Z plane. In Fig. 1, a permanent magnet 30 called a Lorentz magnet here is arranged above this arrangement, wherein a magnetic field generated by the Lorentz magnet 30 would be parallel to the Z axis if it were not distorted by the influence of the coil 16 or of the permanent magnets 18, 20, 22, 24. The Lorentz magnet 30 is also fixedly connected to the rotor 12. A Lorentz force is generated in the direction of the arrow 28 on the arrangement of coil 16 and stator 14 in a manner still to be described with the help of the additional permanent magnet 30 when current is flowing in the coil. With a fixed coil 16, this means a translatory oscillatory movement of the rotor 12 together with the magnets 18, 20, 22, 24 and the Lorentz magnet 30 in the direction 28.

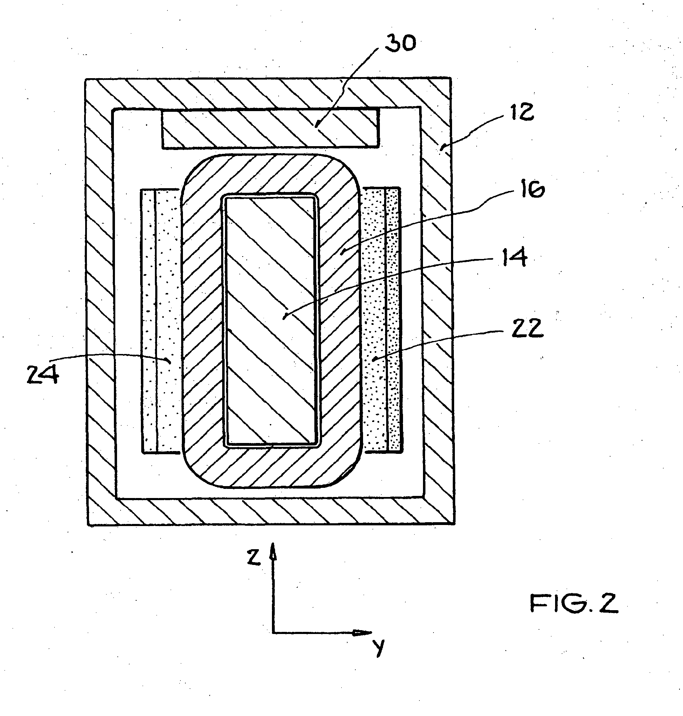

Fig. 2 shows a sectional representation in the Y-Z plane.

The translatory oscillatory movement 28 thereby arises as follows. In a manner known per se, the coil 16 and the iron core 14 act with the permanent magnets 18, 20, 22, 24 as in an electric motor for the generation of a rotary movement when a current is flowing in the coil. For this purpose, a magnetic flux is generated through the coil in the iron core 14. The surrounding permanent magnets 18, 20, 22, 24 - and thus the rotor 12 - align in accordance with the direction of flux.

In addition to the forces which arise which result in the rotary movement, a Lorentz force is additionally present on the conductor of the coil 16 through which current flows in the direction of the vector product from the magnetic flux and the direction of the conductor through which current flows multiplied by the length of the conductor, through which current flows and which is exposed to the magnetic flux, and by the current. The Lorentz magnet 30 is aligned in the embodiment of Figs. 1 and 2 such that it generates magnetic flux substantially in the direction of the axis of rotation (z axis). In this respect, the coil windings of the coil 16 are disposed in the image plane of Fig. 2. In particular in the region of the coil 16 at the top in Fig. 2 and in direct proximity to the Lorentz magnet 30, the conductors of the coil windings through which current flows accordingly extend in the Y direction. If current accordingly flows through the coil 16, a relative force effect arises between the coil and the Lorentz magnet 30 in the x direction. With a fixedly held coil 16, the Lorentz magnet 30 therefore moves together with the rotor 12 in the x direction.

If the rotor 12 rotates continuously, the current direction through the coil changes periodically in the coordinate system of the rotor 12 or of the Lorentz magnet 30 fixedly connected thereto so that a translatory oscillatory movement arises. With a suitable polarity reversal of the current direction for the generation of a rotary oscillatory movement in or opposite to the direction 26, the current direction also changes relative to the magnetic flux generated by the Lorentz magnet so that a translatory oscillatory movement also arises then.

If, for example, the brush head of an electric toothbrush or the shaving head of an electric shaver is connected to the rotor 12, this not only carries out the rotary movement 26 of the rotor 12, but also the translatory movement in the direction 28.

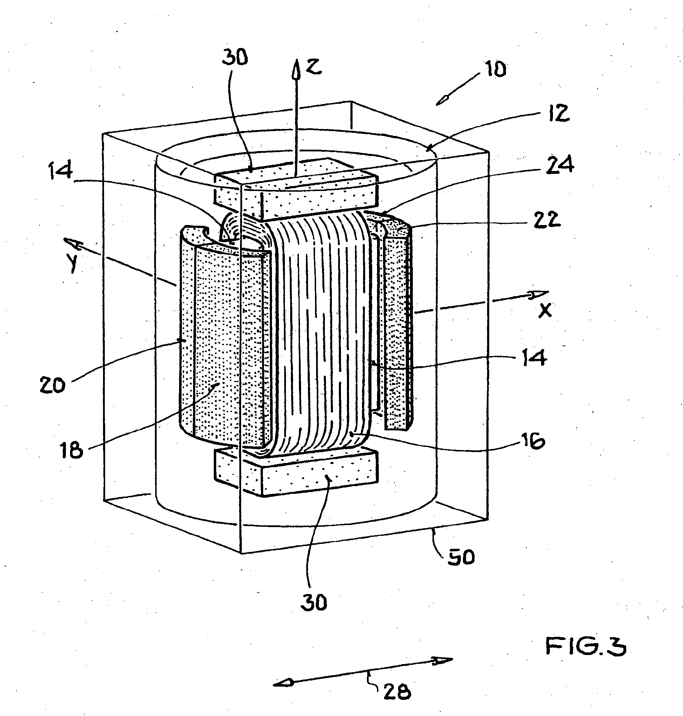

Fig. 3 shows a modified embodiment in which two Lorentz magnets 30 are provided above and beneath the coil 16. The force effect is thereby substantially doubled.

The Lorentz force in arrangements of Figs. 1 to 3 in particular acts on the conductors through which current flows of the here shorter coil side and which are aligned parallel to the y direction.

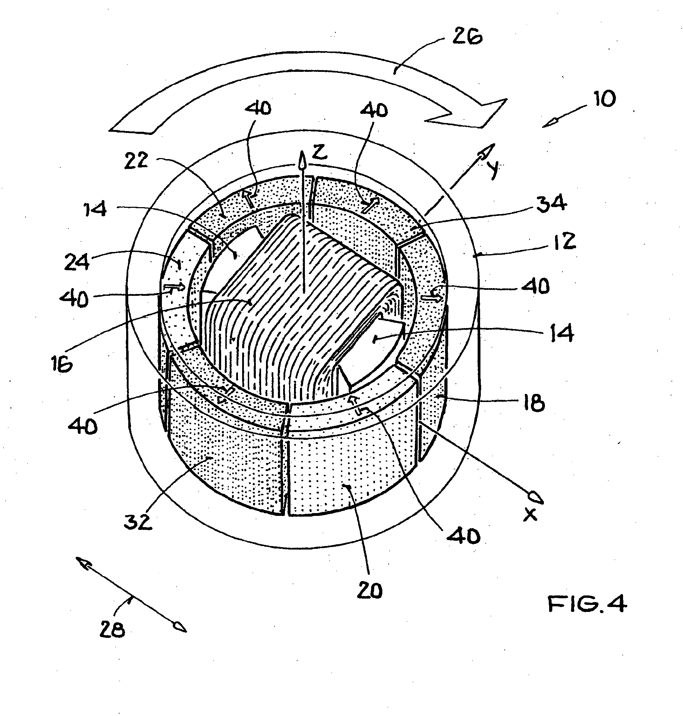

In an embodiment of Fig. 4, magnet segments 32, 34 are arranged as Lorentz magnets between the permanent magnets 18, 20, 22, 24 in addition to the permanent magnets 18, 20, 22, 24 generating the rotary movement. They accordingly generate magnetic flux through the coil 16 in the y direction. This magnetic flux therefore in particular acts on the here longer coil sections which extend parallel to the z direction in the representation of Fig. 4.

The magnetic segments 32, 34 in this embodiment have substantially the same polarity as the permanent magnets 18 and 22. Arrows 40 should schematically indicate the relative polarity of the respective permanent magnets 18, 20, 22, 24 or of the Lorentz magnets 32, 34, with the arrows indicating the direction from south pole to north pole. If, for example, the south poles are arranged radially inwardly in the magnet segments 32, 34 and the permanent magnets 18, 22, the north poles are radially inwardly arranged in the permanent magnets 20, 24.

In an arrangement of Fig. 4, a Lorentz force is generated on the conductors of the coil 16 through which current flows in the direction x. This is aligned in the direction 28 in accordance with the cross product for the determination of the Lorentz force. With a fixedly held coil 16 or a fixedly held iron core 14, the rotor 12 therefore not only moves rotarily in the direction 26, but also translatorily in the direction 28.

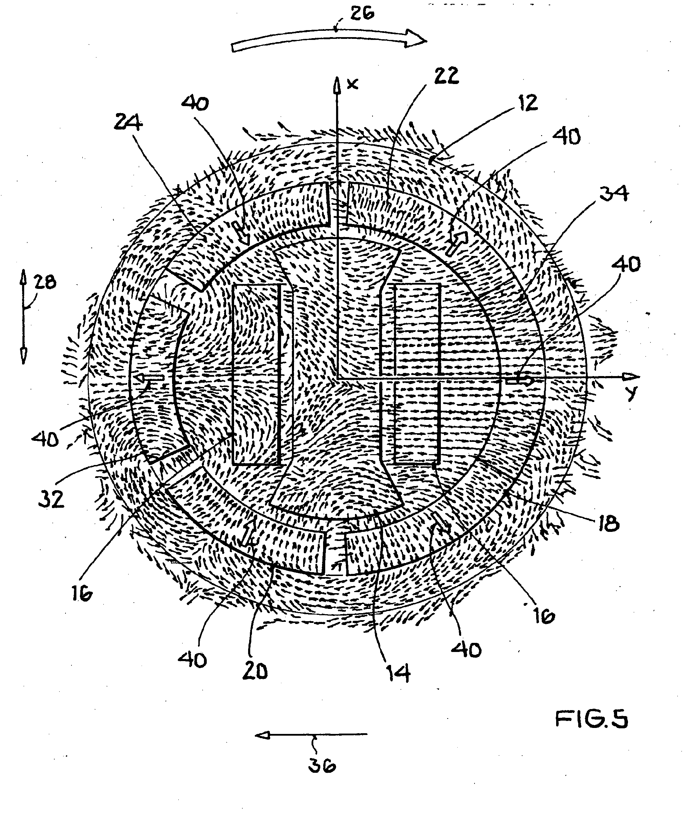

Fig. 5 shows a cross-section through the arrangement of Fig. 4 in the X-Y plane. Additionally, the directions of the magnetic field lines are indicated here which result from the arrangement of the permanent magnets 18, 20, 22, 24 and of the Lorentz magnets 32 and 34. As can be recognized particularly clearly in the representation of Fig. 5, the Lorentz magnet 34 forms part of a larger magnetic element which takes over the function of the permanent magnets 18, 22 and of the Lorentz magnet 34 and whose polarity for all three segments 18, 22, 34 faces in the same direction either radially outwardly or radially inwardly.

Whereas the polarity of the Lorentz magnet 32 faces in the same direction in the radial direction (that is, for example, outwardly when the polarity of the permanent magnets 18, 22 and of the Lorentz magnet 34 is directed outwardly), the polarity of the permanent magnets 20, 24 is oppositely directed in the radial direction.

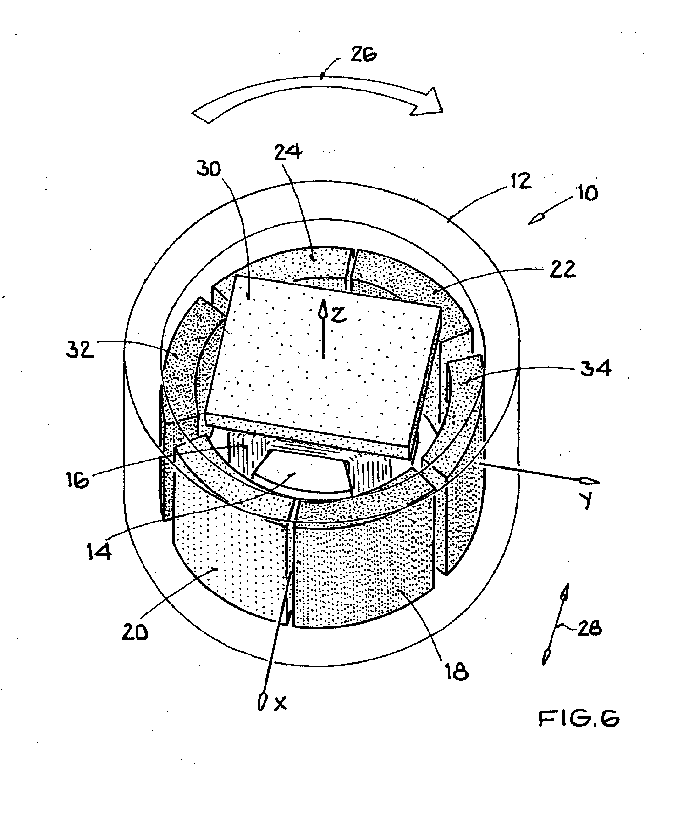

The embodiment of Fig. 6 is a combination of the embodiments of Fig. 1 and Fig. 4. Here, radially arranged Lorentz magnets 32, 34, and an axially arranged Lorentz magnet 30 are provided. A suitable selection of the strength of these magnets allows a flexible setting of the Lorentz force and thus of the translatory force.

In all embodiments, either the translatory oscillatory movement or the rotary oscillatory movement can be excited by a corresponding selection of the frequency of the current fed into the coil. For this purpose, the frequency fed in is selected in accordance with the resonant frequency of the respective oscillatory movement. A selection of a corresponding mixed frequency or irradiation of a plurality of frequencies can be used to set the strength of the oscillatory movements relative to one another.

The embodiments in accordance with the invention reduce the number of the individual parts required for the construction of the drive and enable a compact construction shape of the drive unit. Depending on the construction design of the drive, the achievable torques of the rotary movement and the forces in translatory directions can be set freely. The torques and forces are scaled approximately linearly with the length of the motor and the translatory movement proves to be largely independent of the angular position of the rotary movement. The noise development is lower due to the omission of a transmission for the generation of an additional translatory movement.

### Reference numeral list

- 10: electric motor
- 12: rotor
- 14: iron core
- 16: coil
- 18, 20, 22, 24: permanent magnet
- 26: rotary movement
- 28: translatory oscillatory movement
- 30, 32, 34: Lorentz magnet
- 36: magnetic flux
- 40: polarity
- 50: drawing border

## Claims

1. An electric motor (10) for a small electric appliance, comprising
- a rotor (12) and a stator;
- a coil (16) for the generation of a magnetic field;
- a first magnet arrangement having at least one first permanent magnet (18, 20, 22, 24) which, by interaction with a magnetic field generated using the coil (16), generates a force for the excitation of a rotary movement (26) of the rotor (12) about an axis of rotation,
- a second magnet arrangement which comprises at least one second permanent magnet (30, 32, 34) which is arranged such that a translatory oscillatory movement (28) of the rotor (12) is effected by the Lorentz force acting in the field of the second permanent magnet on the conductors of the coil (16) through which current flows,
**characterized in that**
- either the at least one second permanent magnet (30) is arranged such that its field not influenced by other fields would be aligned substantially parallel to the axis of rotation of the rotor (12), or
- the at least one second permanent magnet (32, 34) is arranged such that its field not influenced by other fields would be aligned substantially radially to the axis of rotation of the rotor (12) and the first magnet arrangement comprises a plurality of permanent magnets (18, 20, 22, 24) which are arranged concentrically to the axis of rotation and the at least one permanent magnet (32,
- 34) of the second magnet arrangement is arranged between permanent magnets (18, 20, 22, 24) of the first magnet arrangement in the circumferential direction of a circular shape defined by the concentric arrangement of the permanent magnets (18, 20, 22, 24) of the first magnet arrangement.

2. An electric motor in accordance with the first alternative of claim 1, **characterized in that** the at least one second permanent magnet (30) is arranged above or beneath the coil (16) in the direction of the axis of rotation.

3. An electric motor in accordance with the first alternative of claim 1, **characterized in that** the second magnet arrangement moves with the rotor (12).

4. An electric motor in accordance with claim 3, **characterized in that** the second magnet arrangement is fixedly connected to the rotor.

5. An electric motor in accordance with the second alternative of claim 1, **characterized in that** the second magnet arrangement (30, 32, 34) includes at least one additional permanent magnet (30) which is arranged such that its field not influenced by other fields would be aligned substantially parallel to the axis of rotation of the rotor (12), preferably **in that** the at least one additional magnet (30) is arranged above or beneath the coil (16) in the direction of the axis of rotation.

6. An electric motor in accordance with any one of the preceding claims, **characterized in that** at least one permanent magnet (34) of the second magnet arrangement is made in one piece with at least one permanent magnet (18, 22) of the first magnet arrangement.

7. An electric motor in accordance with any one of the preceding claims, **characterized in that** the at least one first permanent magnet (18, 20, 22, 24) and the coil (16) are designed and arranged such that the at least one first permanent magnet (18, 20, 22, 24), by interaction with a magnetic field generated using the coil (16), generates a force for the excitation of a rotary oscillatory movement of the rotor (12).

8. An electric motor in accordance with claim 7, **characterized in that** the rotary oscillatory movement and the translatory oscillatory movement have different resonant frequencies.

9. An electric motor in accordance with any one of the preceding claims, **characterized in that** the rotor (12) includes the first magnet arrangement (18, 20, 22, 24), with the coil (16) preferably being arranged inside the first magnet arrangement (18, 20, 22, 24).

10. A small electric appliance comprising an electric motor having the features of any one of the preceding claims for the excitation of a translatory oscillatory movement and of a rotary movement.

11. A small electric appliance comprising an electric motor in accordance with claim 10, **characterized in that** it is an electric toothbrush with a brush head and the electric motor serves for the generation of a translatory oscillatory movement of the brush head and of a rotary movement of the brush head.

12. A small electric appliance comprising an electric motor in accordance with claim 10, **characterized in that** it is an electric razor with a shaving head and the electric motor serves for the generation of a transitory oscillatory movement of the shaving head and of a rotary movement of the shaving head.

## Patentansprüche

1. Elektrischer Motor (10) für ein kleines Elektrogerät, umfassend
- einen Rotor (12) und einen Stator,
- eine Spule (16) zur Erzeugung eines Magnetfeldes,
- eine erste Magnetanordnung mit mindestens einem ersten Dauermagneten (18, 20, 22, 24), der, durch Wechselwirkung mit einem Magnetfeld, das unter Verwendung der Spule (16) erzeugt wird, eine Kraft für die Erregung einer Drehbewegung (26) des Rotors (12) um eine Drehachse erzeugt,
- eine zweite Magnetanordnung, die mindestens einen zweiten Dauennagneten (30, 32, 34) umfasst, der derart angeordnet ist, dass eine translatorische Schwingungsbewegung (28) des Rotors (12) durch eine Lorentz-Kraft verursacht wird, die im Feld des zweiten Dauermagneten auf die Leiter der Spule (16), durch die Strom fließt, wirkt,
**dadurch gekennzeichnet, dass**
- entweder der mindestens eine zweite Dauermagnet (30) derart angeordnet ist, dass sein Feld, das nicht von anderen Feldern beeinflusst ist, im Wesentlichen parallel zur Rotationsachse der Rotors (12) ausgefluchtet ist, oder
- der mindestens eine zweite Dauermagnet (32, 40) derart angeordnet ist, dass sein Feld, das nicht von anderen Feldern beeinflusst ist, im Wesentlichen radial zur Rotationsachse der Rotors (12) ausgefluchtet ist und die erste Magnetanordnung eine Vielzahl von Dauermagneten (18, 20, 22, 24) umfasst, die konzentrisch zur Rotationsachse angeordnet sind, und der mindestens eine Dauermagnet (32, 34) der zweiten Magnetanordnung zwischen Dauermagneten (18, 20, 22, 24) der ersten Magnetanordnung in der Umfangsrichtung einer runden Form angeordnet ist, die durch die konzentrische Anordnung der Dauermagneten (18, 20, 22, 24) der ersten Magnetanordnung definiert ist.

2. Elektrischer Motor nach der ersten Alternative von Anspruch 1, **dadurch gekennzeichnet, dass** der mindestens eine zweite Dauermagnet (30) über oder unter der Spule (16) in der Richtung der Rotationsachse angeordnet ist.

3. Elektrischer Motor nach der ersten Alternative von Anspruch 1, **dadurch gekennzeichnet, dass** sich die zweite Magnetanordnung mit dem Rotor (12) bewegt.

4. Elektrischer Motor nach Anspruch 3, **dadurch gekennzeichnet, dass** die zweite Magnetanordnung fest mit dem Rotor verbunden ist.

5. Elektrischer Motor nach der zweiten Alternative von Anspruch 1, **dadurch gekennzeichnet, dass** die zweite Magnetanordnung (30, 32, 34) mindestens einen zusätzlichen Dauermagneten (30) umfasst, der derart angeordnet ist, dass sein Feld, das nicht von anderen Feldern beeinflusst ist, im Wesentlichen parallel zur Rotationsachse der Rotors (12) ausgefluchtet ist, vorzugsweise dadurch, dass mindestens ein zusätzlicher Magnet (30) über oder unter der Spule (16) in der Richtung der Rotationsachse angeordnet ist.

6. Elektrischer Motor nach einem der vorstehenden Ansprüche, **dadurch gekennzeichnet, dass** mindestens ein Dauermagnet (34) der zweiten Magnetanordnung aus einem Stück mit mindestens einem Dauermagneten (18, 22) der ersten Magnetanordnung hergestellt ist.

7. Elektrischer Motor nach einem der vorstehenden Ansprüche, **dadurch gekennzeichnet, dass** der mindestens eine erste Dauermagnet (18, 20, 22, 24) und die Spule (16) derart entworfen und angeordnet sind, dass der mindestens eine erste Dauermagnet (18, 20, 22, 24), durch Wechselwirkung mit einem Magnetfeld, das unter Verwendung der Spule (16) erzeugt wird, eine Kraft für die Erregung einer drehenden Schwingungsbewegung des Rotors (12) erzeugt.

8. Elektrischer Motor nach Anspruch 7, **dadurch gekennzeichnet, dass** die drehende Schwingungsbewegung und die translatorische Schwingungsbewegung verschiedene Resonanzfrequenzen aufweisen.

9. Elektrischer Motor nach einem der vorstehenden Ansprüche, **dadurch gekennzeichnet, dass** der Rotor (12) die erste Magnetanordnung (18, 20, 22, 24) umfasst, wobei die Spule (16) vorzugsweise in der ersten Magnetanordnung (18, 20, 22, 24) angeordnet ist.

10. Kleines Elektrogerät, umfassend einen elektrischen Motor mit den Merkmalen eines der vorstehenden Ansprüche für die Erregung einer translatorischen Schwingungsbewegung und einer Drehbewegung.

11. Kleines Elektrogerät, umfassend einen elektrischen Motor nach Anspruch 10, **dadurch gekennzeichnet, dass** es sich um eine elektrische Zahnbürste mit einem Bürstenkopf handelt, und der elektrische Motor zur Erzeugung einer translatorischen Schwingungsbewegung des Bürstenkopfes und einer Drehbewegung des Bürstenkopfes dient.

12. Kleines Elektrogerät, umfassend einen elektrischen Motor nach Anspruch 10, **dadurch gekennzeichnet, dass** es sich um einen elektrischen Rasierapparat mit einem Rasierkopf handelt und der elektrische Motor zur Erzeugung einer translatorischen Schwingungsbewegung des Rasierkopfs und einer Drehbewegung des Rasierkopfs dient.

## Revendications

1. Moteur électrique (10) pour un petit appareil électrique, comprenant
- un rotor (12) et un stator ;
- une bobine (16) pour la production d'un champ magnétique ;
- un premier ordonnancement d'aimant possédant au moins un premier aimant permanent (18, 20, 22, 24) qui, par interaction avec un champ magnétique généré à l'aide de la bobine (16), génère une force pour l'excitation d'un mouvement rotatif (26) du rotor (12) autour d'un axe de rotation,
- un deuxième ordonnancement d'aimant qui comprend au moins un deuxième aimant permanent (30, 32, 34) qui est disposé de telle sorte qu'un mouvement oscillatoire de translation (28) du rotor (12) est effectué par la force de Lorentz agissant dans le champ du deuxième aimant permanent sur les conducteurs de la bobine (16) à travers laquelle s'écoule le courant,
**caractérisé en ce que**
- ou l'au moins un deuxième aimant permanent (30) est disposé de telle sorte que son champ non influencé par d'autres champs serait aligné essentiellement parallèle à l'axe de rotation du rotor (12), ou
- l'au moins un deuxième aimant permanent (32, 34) est arrangé de telle sorte que son champ non influencé par d'autres champs serait aligné essentiellement en sens radial par rapport à l'axe de rotation du rotor (12) et le premier ordonnancement d'aimant comprend une pluralité d'aimants permanents (18, 20, 22, 24) qui sont disposés de manière concentrique à l'axe de rotation et l'au moins un aimant permanent (32, 34) du deuxième ordonnancement d'aimant est arrangé entre les aimants permanents (18, 20, 22, 24) du premier ordonnancement d'aimant dans la direction circonférentielle d'une forme circulaire définie par l'ordonnancement concentrique des aimants permanents (18, 20, 22, 24) du premier ordonnancement d'aimant.

2. Moteur électrique selon la première variante de la revendication 1, **caractérisé en ce que** l'au moins un deuxième aimant permanent (30) est arrangé au-dessus ou en dessous de la bobine (16) dans la direction de l'axe de rotation.

3. Moteur électrique selon la première variante de la revendication 1, **caractérisé en ce que** le deuxième ordonnancement d'aimant se déplace avec le rotor (12).

4. Moteur électrique selon la revendication 3, **caractérisé en ce que** le deuxième ordonnancement d'aimant est relié fixement au rotor.

5. Moteur électrique selon la deuxième variante de la revendication 1, **caractérisé en ce que** le deuxième ordonnancement d'aimant (30, 32, 34) inclut au moins un aimant permanent supplémentaire (30) qui est arrangé de telle sorte que son champ non influencé par d'autres champs serait aligné essentiellement parallèle à l'axe de rotation du rotor (12), de préférence **en ce que** l'au moins un aimant supplémentaire (30) est arrangé au-dessus ou en dessous de la bobine (16) dans la direction de l'axe de rotation.

6. Moteur électrique selon l'une quelconque des revendications précédentes, **caractérisé en ce qu'**au moins un aimant permanent (34) du deuxième ordonnancement d'aimant est fabriqué en une pièce avec au moins un aimant permanent (18, 22) du premier ordonnancement d'aimant.

7. Moteur électrique selon l'une quelconque des revendications précédentes, **caractérisé en ce que** l'au moins un premier aimant permanent (18, 20, 22, 24) et la bobine (16) sont conçus et arrangés de telle sorte que l'au moins un premier aimant permanent (18, 20, 22, 24), par interaction avec un champ magnétique généré à l'aide de la bobine (16), génère une force pour l'excitation d'un mouvement rotatif oscillant du rotor (12).

8. Moteur électrique selon la revendication 7, **caractérisé en ce que** le mouvement rotatif oscillant et le mouvement oscillatoire de translation possèdent des fréquences de résonance différentes.

9. Moteur électrique selon l'une quelconque des revendications précédentes, **caractérisé en ce que** le rotor (12) inclut le premier ordonnancement d'aimant (18, 20, 22, 24), la bobine (16) étant de préférence arrangée à l'intérieur du premier ordonnancement d'aimant (18, 20, 22, 24).

10. Petit appareil électrique comprenant un moteur électrique possédant les caractéristiques selon l'une quelconque des revendications précédentes pour l'excitation d'un mouvement oscillatoire de translation et d'un mouvement rotatif.

11. Petit appareil électrique comprenant un moteur électrique selon la revendication 10, **caractérisé en ce qu'**il s'agit d'une brosse à dents électrique avec une tête de brosse et le moteur électrique sert à la production d'un mouvement oscillatoire de translation de la tête de brosse et d'un mouvement rotatif de la tête de brosse.

12. Petit appareil électrique comprenant un moteur électrique selon la revendication 10, **caractérisé en ce qu'**il s'agit d'un rasoir électrique avec une tête de rasage et le moteur électrique sert à la production d'un mouvement oscillatoire de translation de la tête de rasage et d'un mouvement rotatif de la tête de rasage.
